(19) Europäisches Patentamt
European Patent Office
Office européen des brevets

(11) **EP 4 560 762 A1**

(12) **EUROPEAN PATENT APPLICATION**
published in accordance with Art. 153(4) EPC

(43) Date of publication:
**28.05.2025 Bulletin 2025/22**

(21) Application number: **23877730.4**

(22) Date of filing: **13.10.2023**

(51) International Patent Classification (IPC):
***H01M 10/056*** *(2010.01)* ***H01M 10/052*** *(2010.01)*
***C08J 5/22*** *(2006.01)*

(52) Cooperative Patent Classification (CPC):
**C08J 5/22; H01M 10/052; H01M 10/056**

(86) International application number:
**PCT/KR2023/015789**

(87) International publication number:
**WO 2024/080807 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.10.2022 KR 20220132766**
**12.10.2023 KR 20230136063**

(71) Applicant: **LG Energy Solution, Ltd.**
**Seoul 07335 (KR)**

(72) Inventors:
- **NAM, Sung Hyun**
  **Daejeon 34122 (KR)**
- **HAN, Hyea Eun**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) METHOD FOR PREPARING COMPOSITE SOLID ELECTROLYTE AND COMPOSITE SOLID ELECTROLYTE PREPARED THEREBY

(57) The present disclosure relates to a method for preparing a composite solid electrolyte and a composite solid electrolyte prepared by the preparation method. The preparation method includes the steps of: (S1) preparing a mixed solution containing a PEO (polyethylene oxide)-based copolymer containing a crosslinkable functional group and a ceramic compound; (S2) unwinding a substrate using an unwinder and supplying it to a transfer path; (S3) coating the mixed solution onto the substrate to form a coating film; (S4) transferring the substrate having the coating film formed thereon to a drying section and drying it to form a polymer film; (S5) transferring the polymer film to a vapor deposition section and vapor-depositing a polar solvent to form a composite solid electrolyte layer; and (S6) winding and recovering the substrate including the composite solid electrolyte layer using a rewinder.

【Figure 1】

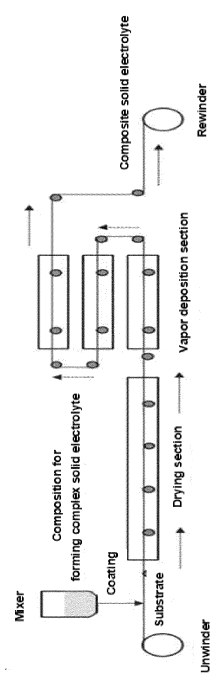


EP 4 560 762 A1

## Description

## [TECHNICAL FIELD]

Cross Citation with Related Application(s)

This application claims the benefit of Korean Patent Application No. 10-2022-0132766 filed on October 14, 2022 and Korean Patent Application No. 10-2023-0136063 filed on October 12, 2023 in the Korean Intellectual Property Office, the disclosures of which are incorporated herein by reference in their entirety.
The present disclosure relates to a method for preparing a composite solid electrolyte and a composite solid electrolyte prepared therefrom.

## [BACKGROUND]

A lithium ion battery using a liquid electrolyte has a structure in which a negative electrode and a positive electrode are defined by a separator, and thus may cause a short-circuit when the separator is damaged by deformation or external impact, resulting in a risk, such as overheating or explosion. Therefore, it can be said that development of a solid electrolyte capable of ensuring safety is a very important issue in the field of lithium ion secondary batteries.
A lithium secondary battery using a solid electrolyte is advantageous in that it is enhanced in safety, prevents leakage of an electrolyte to improve the reliability of a battery, and facilitates manufacture of a thin battery. In addition, lithium metal can be used as a negative electrode to improve energy density, and therefore, it has been expected to be applied to a high-capacity secondary battery for electric vehicles in addition to a compact secondary battery, and thus has been spotlighted as a next-generation battery.
Among solid electrolytes, a polymer solid electrolyte may include a polymeric material made of an ion conductive material, or an inorganic material such as oxides or sulfides having ion-conducting properties. **In** addition, a composite polymer solid electrolyte which is a mixture of polymer materials and inorganic materials has been proposed.
Such a conventional composite polymer solid electrolyte is prepared by dispersing oxide-based ceramic powder, etc. in a polymer matrix, and has the advantage of having higher stability than existing liquid electrolytes and higher ionic conductivity than a polymer solid electrolyte, but has the difficulty of meeting basic prerequisites, such as improving the dispersibility of ceramic particles such as oxides in a polymer matrix and optimizing the physical properties of the polymer matrix used. In particular, there are limitations in that it is difficult to prepare a composite solid electrolyte with improved ionic conductivity using a highly crystalline polymer such as polyethylene oxide (PEO). In other words, the high crystallinity of the polymer impedes the chain mobility of the polymer chain, and thus, the movement of lithium ions within the polymer solid electrolyte is limited, which made it difficult to improve the ionic conductivity of the polymer solid electrolyte.
Inorder to overcome such limitations of the conventional composite solid electrolyte, a technology has been developed to modify the structure of the crystalline polymer or add a separate plasticizer to the polymer to thereby improve the mobility of the polymer chain and enhance the ionic conductivity of the composite solid electrolyte. However, the solid polymer electrolyte prepared by using such structural deformation of polymers and addition of plasticizers has difficulty in improving the ionic conductivity to a level of 1 mS/cm or higher.
Therefore, in addition to the polymer solid electrolyte prepared by modifying the structure of the polymer, adding a separate plasticizer, or immersing the solid electrolyte in the liquid electrolyte, there is a need to develop a technology relating to a method for preparing a composite solid electrolyte, which can improve the ionic conductivity of the electrolyte and enables a continuous process, as a pure solid electrolyte for all-solid-state battery.

[Prior Art Literature]

[Patent Literature]

(Patent Literature 1) Japanese Unexamined Patent Publication No. 1994-124713

## [DETAILED DESCRIPTION OF THE INVENTION]

## [Technical Problem]

It is an object of the present disclosure to provide a method for preparing a composite solid electrolyte that improves ionic conductivity and enables a continuous process, and a composite solid electrode prepared therefrom.

**[Technical Solution]**

According to one embodiment of the present disclosure, there is provided a method for preparing a composite solid electrolyte, the method comprising the steps of: (S1) preparing a mixed solution containing a PEO (polyethylene oxide)-based copolymer containing a crosslinkable functional group and a ceramic compound; (S2) unwinding a substrate using an unwinder and supplying it to a transfer path; (S3) coating the mixed solution onto the substrate to form a coating film; (S4) transferring the substrate having the coating film formed thereon to a drying section and drying it to form a polymer film; (S5) transferring the polymer film to a vapor deposition section and vapor-depositing a polar solvent to form a composite solid electrolyte layer; and (S6) winding and recovering the substrate including the composite solid electrolyte layer using a rewinder.

In the preparation method, the mixed solution of step (S1) may further comprise at least one selected from the group consisting of a lithium salt, a crosslinking agent, and an initiator. Such a mixed solution may contain 10 to 100 parts by weight, or 10 to 60 parts by weight of the ceramic compound based on 100 parts by weight of the PEO (polyethylene oxide)-based copolymer.

In the vapor deposition of step (S5), the polar solvent is naturally evaporated at room temperature or evaporated by heating so that gas molecules of the polar solvent can be included on the surface or inside of the polymer chain.

Meanwhile, in the preparation method, the crosslinkable functional group is bonded to the PEO-based copolymer via an alkylene linker or alkylene oxide linker having 0 to 10 carbon atoms (provided that an alkylene linker having 0 carbon atoms represents a single bond), and may be selected from the group consisting of a hydroxyl group, a carboxyl group, an isocyanate group, a nitro group, a cyano group, an amine group, an amide group, an epoxy group and an allyl group.

In a more specific example, the PEO(polyethylene oxide)-based copolymer may be a copolymer containing repeating units of the following Chemical Formulas 1 to 3:

[Chemical Formula 1]

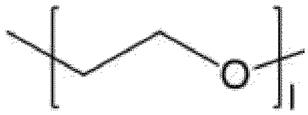

[Chemical Formula 2]

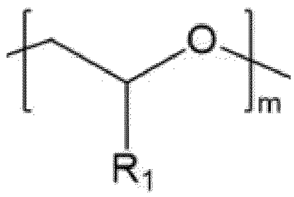

[Chemical Formula 3]

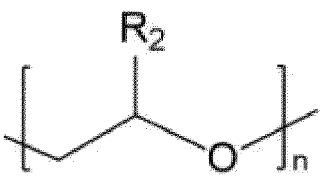

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and

l, m and n are the number of repetitions of the repeating unit, wherein l and n are each independently an integer of 1 to 1000, and m is an integer of 0 to 1000.

Further, in the preparation method, a composite solid electrolyte may be prepared in which a gas molecule of the polar solvent is a polar compound, and the content of the polar compound is 0.1% by weight or more and less than 10% by weight based on the total weight of the composite solid electrolyte.

At this time, the polar solvent may comprise at least one selected from the group consisting of a carbonate-based solvent and a sulfonyl-based solvent. More specifically, the polar solvent may comprise at least one selected from the group consisting of ethyl methyl carbonate(EMC), dimethyl carbonate(DMC), diethyl carbonate(DEC), ethylene carbonate(EC), propylene carbonate(PC), vinylene carbonate(VC) and Sulfolane.

Meanwhile, the ceramic compound may comprise at least one selected from the group consisting of a lithium-lanthanum-zirconium oxide(LLZO)-based compound, a lithium-silicon-titanium phosphate(LSTP)-based compound, a lithium-lanthanum-titanium oxide(LLTO)-based compound, a lithium-aluminum-titanium phosphate(LATP)-based compound, a lithium-aluminum-germanium phosphate(LAGP)-based compound, and a lithium-lanthanum-zirconium-titanium oxide(LLZTO)-based compound.

Further, in the preparation method, the steps (S1) to (S6) may be performed continuously.

Meanwhile, according to another embodiment of the present disclosure, there is provided a composite solid electrolyte prepared by the method of the above-mentioned one embodiment. Such a composite solid electrolyte comprises a polymer containing a PEO-based copolymer containing a crosslinkable functional group; a ceramic compound; and a polar compound, wherein at a part of the crosslinkable functional group form a crosslinking bond with each other, so that the polymer forms a three-dimensional network structure, and wherein the polar compound in a gaseous state is contained in the three-dimensional network structure or may have a structure bonded to the polymer chain.

## [Advantageous Effects]

The method for preparing a composite solid electrolyte according to the present disclosure can prepare a composite solid electrolyte by a continuous process, and is being capable of being mass-produced.

In addition, the composite solid electrolyte can maintain the original structural characteristics of the polymer without deforming or destructing the polymer chain, improve the mobility of the polymer chain and uniformly distribute the ceramic particles in the composite solid electrolyte, thereby increasing the ionic conductivity of the composite solid electrolyte.

Further, the composite solid electrolyte contains a very small amount of a polar solvent (polar compound) in a gaseous state, and thus can exhibit improved ionic conductivity and mechanical properties.

## [BRIEF DESCRIPTION OF THE DRAWINGS]

Figure 1 is a flow chart of the method for preparing a composite solid electrolyte of the present disclosure.

## [DETAILED DESCRIPTION OF THE EMBODIMENTS]

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The term "polymer film" as used herein refers to a film which is prepared by coating and drying a mixed solution containing a PEO (polyethylene oxide)-based copolymer containing a crosslinkable functional group and a ceramic compound. A polymer chain containing a crosslinking bond by the crosslinkable functional group is formed in the inside of the polymer film, and the internal space of the polymer chain contains a ceramic compound in a dispersed form.

The term "composite solid electrolyte" as used herein refers to an electrolyte having a structure in which the polymer film is vapor-deposited with a polar solvent, so that a polar compound, which is a gas molecule of the polar solvent, is contained on the surface or inside of the polymer chain.

With regard to the term "bond" as used herein, that is, the conformation in which a polar compound (vapor deposited polar solvent) is "bonded" to a polymer chain, e.g., a chain of a PEO-based copolymer, the term "bond" broadly refers to a conformation in which a polar compound in a gaseous state, which is a polar solvent molecule, is maintained a state fixed to a polymer chain by vapor-deposition of a polar solvent. In other words, the "bond" is not limited to a specific

type of physical bond, chemical bond, etc., and means including a state fixed by various bonds, including physical bonds, chemical bonds, etc., or a state simply attached and fixed, such as by adsorption, etc., or a state that is included in a three-dimensional network structure formed by crosslinking of the polymer, and is located and fixed adjacent to a polymer chain or crosslinking structure.

The term "three-dimensional network structure" as used herein is a structure that includes a three-dimensional frame and an internal space defined by the frame, wherein the frame may include a polymer chain that includes a crosslinking bond formed by the crosslinkable functional groups, e.g., a crosslinking bond between the crosslinkable functional groups and/or a crosslinking bond between the crosslinkable functional groups and a crosslinking agent. The three-dimensional network structure may also be referred to as a crosslinked structure.

In the present disclosure, the presence or inclusion of a polar compound in a composite solid electrolyte in a "gaseous state" indicates that the polar compound is deposited in a vapor state, unlike the case where the polar solvent or the electrolyte containing the same is injected in a liquid state, and the polar compound exists in a state distinct from the liquid injected electrolyte immediately after preparing the composite solid electrolyte or during the charging and discharging process of an all-solid-state secondary battery containing the same. However, depending on the storage or operating conditions of the composite solid electrolyte and/or secondary battery, the vapor-deposited polar compound may have a locally or temporarily liquefied state. Even in such a case, the vapor-deposited polar compound exhibits a higher mobility than the polar solvent injected in a liquid state, and exhibits a state different from the polar solvent in a liquid state, which can also be considered to exist or be included in the "gaseous state" mentioned above.

On the other hand, conventionally, in order to improve the ionic conductivity of the solid electrolyte, a composite solid electrolyte was prepared in which ceramic compounds such as oxides were dispersed in a polymer matrix, however, such a composite solid electrolyte has a problem of reducing the ionic conductivity when the oxide-based ceramic particles in the polymer matrix are ununiformly distributed or when a highly crystalline polymer such as polyethylene oxide is used as the polymer.

Further, conventionally, in order to improve the ionic conductivity of the solid electrolyte, a solid electrolyte was immersed in or supported on a liquid electrolyte or a solvent, or the liquid electrolyte or solvent was directly injected into the solid electrolyte in a liquid state. When a liquid electrolyte or solvent is added directly to the solid electrolyte in this way, it has the effect of improving the ionic conductivity of the solid electrolyte, but this is merely an effect of increasing the ionic conductivity of the solid electrolyte based on the high ionic conductivity of the liquid itself, and the degree of improvement thereof is also not sufficient, and it is necessary to inject a considerable amount of liquid electrolyte. In other words, since the conduction of lithium ions is achieved by the liquid electrolyte added to the solid electrolyte rather than the inherent physical properties of the solid electrolyte, it is far from improving the physical properties of the solid electrolyte itself. Further, when a liquid electrolyte or solvent was added directly into a solid electrolyte in liquid form, there was a problem that the structure of the solid electrolyte collapsed due to unexpected side reactions between the polymer and the liquid phase, such as damage to the polymer chain or breaking of bonds within the polymer, or a decrease in ionic conductivity resulting therefrom.

Further, when solvent or liquid electrolyte is directly injected into the solid electrolyte, liquid molecules rapidly diffuse within the solid electrolyte to rapidly cause a relaxation phenomenon of the polymer chain and promote gelation on the surface, which may lead to a decrease in mechanical properties, and problems such as liquid leakage of the liquid electrolyte may not be completely resolved.

In addition, Japanese Unexamined Patent Publication No. 1994-124713, which is a prior art, discloses a technology for vapor-depositing a solvent on a general PEO (polyethylene oxide) polymer. In this case, there was a problem that the internal structure of the polymer was collapsed and the ionic conductivity could not be ensured.

Thus, the present inventors have prepared a polymer film which is crosslinked with a PEO (polyethylene oxide)-based copolymer modified with a crosslinkable functional group, wherein during crosslinking, the ceramic compounds are mixed together to ensure that the ceramic compounds are uniformly dispersed in the internal space of the polymer chain. Further, by bringing the polymer film into contact with a vapor of the polar solvent, a very small amount of gas molecules of the polar solvent are boned to the polymer chain or included in the internal space of the polymer chain.

The composite solid electrolyte prepared in this way comprises a polymer containing a PEO (polyethylene oxide)-based copolymer containing a crosslinkable functional group; a ceramic compound; and a polar compound, wherein at least a part of the crosslinkable functional groups form a crosslinking bond with each other, so that the polymer forms a three-dimensional network structure, and wherein the polar compound in a gaseous state is contained in the three-dimensional network structure or can represent a structure bonded on a polymeric chain.

It was confirmed that this composite solid electrolyte exhibits improved ionic conductivity even while containing a trace amount of a polar compound derived from a polar solvent in a gaseous state. This is predicted to be because the polar compound in a gaseous state affect the physical properties such as crystallinity of the PEO-based copolymer, and increases the chain mobility of the polymer chain, thereby improving the conductivity of lithium ions contained in the solid electrolyte. In addition, such an ionic conductivity can be further improved by uniform dispersion of the ceramic compound.

Furthermore, the present inventors have developed a method for preparing a composite solid electrolyte which

can prepare a composite solid electrolyte showing improved ionic conductivity through a continuous process using the above-mentioned principle, so that its mass production is made possible.

Next, such a method for preparing a composite solid electrolyte will be described in detail.

## Method for preparing composite solid electrolyte

According to one embodiment of the disclosure, there is provided a method for preparing a composite solid electrolyte, and an example of a flow chart thereof is shown in Figure 1.

Referring to Figure 1, the method for preparing the composite solid electrolyte of one embodiment comprises the steps of: (S1) preparing a mixed solution containing a PEO (polyethylene oxide)-based copolymer containing a crosslinkable functional group and a ceramic compound; (S2) unwinding a substrate using an unwinder and supplying it to a transfer path; (S3) coating the mixed solution onto the substrate to form a coating film; (S4) transferring the substrate having the coating film formed thereon to a drying section and drying it to form a polymer film; (S5) transferring the polymer film to a vapor deposition section and vapor-depositing a polar solvent to form a composite solid electrolyte layer; and (S6) winding and recovering the substrate including the composite solid electrolyte layer using a rewinder. At this time, steps (S1) to (S6) may be performed continuously.

Below, the preparation method of one embodiment will be described in more detail for each step.

In step (S1), a mixed solution containing a PEO (polyethylene oxide)-based copolymer containing a crosslinkable functional group and a ceramic compound can be prepared.

The mixed solution can be prepared by mixing the PEO-based copolymer and a ceramic compound in a solvent, and may be further prepared when mixing any one or more of a lithium salt, a crosslinking agent, and an initiator. An electrolyte can be formed by mixing the lithium salt, and a crosslinking bond of the PEO-based copolymer can be formed when mixing a crosslinking agent and/or an initiator.

The solvent is not particularly limited as long as it is a solvent that can be mixed and dissolved with the PEO-based copolymer and any one or more of a lithium salt, a crosslinking agent and an initiator, and can be easily removed by a drying process. For example, the solvent may be acetonitrile, methanol, ethanol, tetrahydrofuran, water, isopropyl alcohol, dimethyl sulfoxide(DMSO), N-methyl-2-pyrrolidone(NMP), N,N-dimethyl formamide(DMF) or the like. Such a solvent is a solvent that serves as a reaction medium for forming a crosslinking bond, and is distinguished from polar solvents contained in liquid electrolytes, and the like, and is completely removed by drying or the like after crosslinking.

The concentration of the mixed solution can be appropriately adjusted in consideration of the extent to which the molding process for preparing the composite solid electrolyte can proceed smoothly. Specifically, the concentration of the mixed solution may mean the concentration (w/w%) of the polymer in the mixed solution. At this time, the concentration of the polymer may be the concentration of the PEO-based copolymer. For example, the concentration of the mixed solution may be 5% by weight to 20% by weight, and specifically, it may be 5% by weight or more, 7% by weight or more, or 9% by weight or more, and 13% by weight or less, 17% by weight or less, or 20% by weight or less. If the concentration of the mixed solution is less than 5% by weight, the concentration may be too diluted, and the mechanical strength of the composite solid electrolyte may decrease, or it may flow down when coated onto a substrate. If the concentration is more than 20% by weight, it will be difficult to dissolve the lithium salt at the desired concentration in the mixed solution, the viscosity will be high, and the solubility will be reduced, or it may be difficult to coat the lithium salt in the form of a uniform thin film.

Further, the crosslinkable functional group may be composed of two or more types. The crosslinkable functional groups may be the same or different from each other, and preferably may be different. When the crosslinkable functional groups are different, multiple types of repeating units each containing these functional groups may be included. Further, when multiple types of crosslinkable functional groups are included, it may become easier to control the mobility and ionic conductivity of the polymer chain.

The crosslinkable functional group refers to a functional group capable of forming a crosslinking bond between crosslinkable functional groups and/or of forming a crosslinking bond with each other through a crosslinking agent, and can be bonded with the main chain of the polymer chain in the form of a side chain.

Specifically, the crosslinkable functional group may be directly bonded to the main chain or the like of the PEO-based copolymer, or may be bonded through an alkylene or alkylene oxide linker. Thus, the crosslinkable functional group may be bonded through an alkylene linker or alkylene oxide linker having 0 to 10 carbon atoms (provided that an alkylene linker having 0 carbon atoms represents a single bond), and may be at least one selected from the group consisting of a hydroxyl group, a carboxyl group, an isocyanate group, a nitro group, a cyano group, an amine group, an amide group, an epoxy group and an allyl group.

In a more specific example, the PEO-based copolymer containing the crosslinkable functional group may be a copolymer containing repeating units of the following Chemical Formulas 1 to 3:

[Chemical Formula 1]

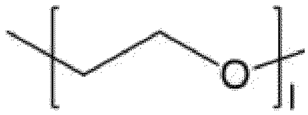

[Chemical Formula 2]

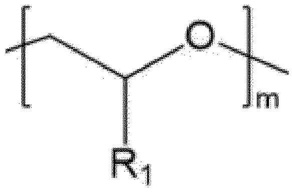

[Chemical Formula 3]

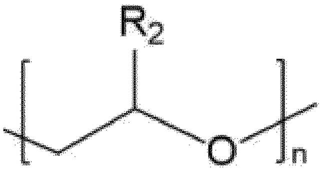

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms (provided that an alkylene linker having 0 carbon atoms represents a single bond), and

l, m and n are the number of repetitions of the repeating unit, wherein l and n are each independently an integer of 1 to 1000, and m is an integer of 0 to 1000.

For example, the crosslinkable functional group of $R_2$ can form a polymer having a matrix form of a three-dimensional network structure formed by the crosslinking bond. By forming a three-dimensional network structure by the crosslinking bond, the mechanical properties of the composite solid electrolyte can be improved, and a polar compound in a gaseous state may be included or bonded within such a three-dimensional network structure to provide a composite solid electrolyte having improved ionic conductivity.

Further, it is obvious that the PEO-based copolymer may include two or more types of repeating units of Chemical Formula 3 in which the $R_2$ is crosslinkable functional groups different from each other, and may also include one or more types of repeating units of Chemical Formula 2.

When l, m and n are each less than 1, it is difficult to form a polymer because the molecular weight is small, and when l, m and n are each more than 1000, the solubility during preparation of a polymer solution decreases due to an increase in viscosity, and molding for preparing a solid electrolyte may become difficult. In particular, when the number of repetitions of the repeating unit of Chemical Formula 3 containing the crosslinkable functional group among l, m, and n is more than 1000, the degree of crosslinking is excessively increased, the mobility of the polymer chain may decrease and the ionic conductivity of the composite solid electrolyte may decrease.

As used herein, "hydroxy group" refers to -OH group.

As used herein, "carboxyl group" refers to -COOH group.

As used herein, "isocyanate group" refers to -N=C=O group.

As used herein, "nitro group" refers to $-NO_2$ group.

As used herein, "cyano group" refers to -CN group.

As used herein, "amide group" refers to -C(=O)N R'R", wherein R' and R" may each independently be hydrogen or a C1 to C5 alkyl group, or R' and R" together with the N atom to which they are attached may form a heterocycle having

C4 to C8 atoms in the ring structure.

As used herein, "amine group" may be selected from the group consisting of a monoalkylamine group; a monoarylamine group; a monoheteroarylamine group; a dialkylamine group; a diarylamine group; a diheteroarylamine group; an alkylarylamine group; an alkylheteroarylamine group; and an arylheteroarylamine group, and the carbon number thereof is not particularly limited, but is preferably 1 to 30. Specific examples of the amine group include a methylamine group, a dimethylamine group, an ethylamine group, a diethylamine group, a phenylamine group, a naphthylamine group, a biphenylamine group, a dibiphenylamine group, an anthracenyl amine group, a 9-methyl-anthracenylamine group, a diphenylamine group, a phenylnaphthylamine group, a ditolylamine group, a phenyltolylamine group, a triphenylamine group, a biphenylnaphthylamine group, a phenylbiphenyl amine group, a biphenylfluorenylamine group, a phenyltriphenylenylamine group, a biphenyltriphenylenylamine group, and the like, but are not limited thereto. Further, "amino group" refers to $-NH_2$.

As used herein, "allyl group" refers to $-CH_2-CH=CH_2$ group.

The weight average molecular weight (Mw) of the copolymer containing Chemical Formulas 1 to 3 may be 100,000 g/mol to 2,000,000 g/mol, and specifically, it may be 100,000 g/mol or more, 200,000 g/mol or more, or 300,000 g/mol or more, and 1,600,000 g/mol or less, 1,800,000 g/mol or less, or 2,000,000 g/mol or less. If the weight average molecular weight (Mw) of the copolymer is less than 100,000 g/mol, the mechanical properties of the film capable of forming a composite solid electrolyte may not be satisfied. If the weight average molecular weight (Mw) of the copolymer is more than 2,000,000 g/mol, the solubility during preparation of the polymer solution decreases due to an increase in viscosity, and polymer film molding for preparing the composite solid electrolyte may become difficult. Further, the ionic conductivity of the composite solid electrolyte may decrease due to a decrease in chain mobility caused by an increase in crystallinity inside the film during the production of the polymer film. In particular, when the number of repetitions of the repeating unit containing a crosslinkable functional group among l, m, and n is more than 1000, the degree of crosslinking increases excessively, and the mobility of polymer chains decreases, which may lead to a decrease in the ionic conductivity of the composite solid electrolyte.

Further, the copolymer may be a random copolymer or a block copolymer.

Meanwhile, the composite solid electrolyte may include a ceramic compound. The ceramic compound has a lithium ion transfer ability to improve the conductivity of lithium ions, and preferably contains lithium atoms but does not store lithium, and has the function of transporting lithium ions, and can improve the ionic conductivity of the composite solid electrolyte.

Further, the ceramic compound may be included in a uniformly dispersed state in the internal space of the crosslinked polymer chains, in the polymer film formed by a crosslinking bond induced during drying in step (S4).The ceramic compounds are mixed together in the formation of the mixed solution, and can be uniformly dispersed without aggregation in the internal space between the crosslinked polymer chains. Such ceramic compounds can be advantageous in improving the mechanical strength and ionic conductivity of the composite solid electrolyte due to its uniform dispersion form.

Further, the ceramic compound may be in the form of particles. Due to the morphological characteristics of particles, they can be contained in a more uniformly dispersed state within the composite solid electrolyte. The particles of the ceramic compound may be spherical, and its diameter may be 100 nm to 1000 nm. If the diameter is less than 100 nm, the effect of non-crystallization due to the decrease in crystallinity of the polymer may be slight, and if the diameter is more than 1000 nm, dispersibility may decrease due to an increase of aggregation between particles, which may make it difficult to disperse uniformly.

The ceramic compound may be an oxide-based or phosphate-based compound, for example, an oxide-based solid electrolyte in the form of lithium metal oxide or lithium metal phosphate. More specifically, the ceramic compound may be at least one selected from the group consisting of garnet-type lithium-lanthanum-zirconium oxide(LLZO, $Li_7La_3Zr_2O_{12}$)-based compound, perovskite-type lithium-lanthanum-titanium oxide(LLTO, $Li_3xLa_{2/3-x}TiO_3$)-based compound, phosphate-based NASICON type lithium-aluminum-titanium phosphate(LATP, $Li_{1+x}Al_xTi_{2-x}(PO_4)_3$)-based compound, lithium-aluminum-germanium phosphate(LAGP, $Li_{1.5}Al_{0.5}Ge_{1.5}(PO_4)_3$)-based compound, lithium-silicon-titanium phosphate(LSTP, $LiSi0_2TiO_2(PO_4)_3$)-based compound, and lithium-lanthanum-zirconium-titanium oxide (LLZTO)-based compound. More preferably, at least one oxide-based solid electrolyte selected from the group consisting of lithium-lanthanum-zirconium oxide(LLZO), lithium-silicon-titanium phosphate(LSTP), lithium-lanthanum-titanium oxide(LLTO), lithium-aluminum-titanium phosphate(LATP), lithium-aluminum-germanium phosphate(LAGP), and lithium-lanthanum-zirconium-titanium oxide(LLZTO) may be used.

The oxide-based solid electrolyte made of the oxide-based or phosphate-based compound generally has an ionic conductivity value of up to $10^{-4}$ ~ $10^{-3}$ S/cm at room temperature, and has the advantage of being stable in a high voltage region, being stable in air, and thus being easy to synthesize and handle.

Therefore, the above-mentioned composite solid electrolyte may further include a ceramic compound to compensate for the drawbacks involved in the polymer-based solid electrolyte.

Further, the ceramic compound does not easily cause combustion or ignition phenomenon even under high

temperature conditions of 400°C or more, and thus is high in high-temperature stability. Therefore, when the composite solid electrolyte contains a ceramic compound, it is possible to improve not only the mechanical strength but also the high temperature stability and ionic conductivity of the composite solid electrolyte.

The ceramic compound may be included in an amount of 10 parts by weight to 100 parts by weight, or 10 parts by weight to 60 parts by weight, based on 100 parts by weight of the PEO-based copolymer containing a crosslinkable functional group.

If the ceramic compound is included in an excessively small amount, the effect of lowering the crystallinity of the polymer and making it amorphous due to the ceramic compound is reduced, so that the effect of increasing the ionic conductivity of the composite solid electrolyte is not significant, and the mechanical properties may also not meet the expected level due to the formation of the composite.

If the ceramic compound is included in an excessively large amount, the ceramic compound is not uniformly dispersed within the polymer, and a phenomenon occurs where the ceramic compound particles clump and aggregate with each other, so that a composite solid electrolyte with reduced ionic conductivity can be prepared.

In one embodiment of the disclosure, the lithium salt can be used as a raw material to form an electrolyte. The lithium salt is contained in a dissociated ionic state in the internal space between the polymer chains, and thus, can improve the ionic conductivity of the composite solid electrolyte. At least a part of the cations and/or anions dissociated from the lithium salt exist in a state bonded to the polymer chain, and may exhibit mobility during charging/discharging of the battery.

The lithium salt may include at least one selected from the group consisting of $(CF_3SO_2)_2NLi$(lithium bis(trifluoromethanesulphonyl)imide, LiTFSI), $(FSO_2)_2NLi$(lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, lithium chloroborane, lithium lower aliphatic carboxylate and lithium tetraphenyl borate.

Further, the lithium salt may be included in an amount of 25 to 45 parts by weight based on 100 parts by weight of the PEO-based copolymer containing the crosslinkable functional group. Specifically, it may be included in an amount of 25 parts by weight or more, 30 parts by weight or more, or 35 parts by weight or more, or 40 parts by weight or less, or 45 parts by weight or less. **If** the content of the lithium salt is less than 25 parts by weight, the ionic conductivity of the composite solid electrolyte may decrease, and if the content of the lithium salt exceeds 45 parts by weight, the mechanical strength may decrease.

The crosslinking agent may form a crosslinking bond with the crosslinkable functional group, wherein the crosslinking bond may be a hydrogen bond, a bond formed by Lewis acid-base interaction, an ionic bond, a coordination bond, or a bond formed by radical polymerization.

The crosslinking agent is not particularly limited as long as it is a polyfunctional crosslinking agent that can form a crosslinking bond with the crosslinkable functional group. For example, the crosslinking agent may be one or more multifunctional crosslinking agents, for example, a bifunctional or higher polyvalent compound, selected from the group consisting of trimethylolpropane trimethacrylate, poly(ethylene glycol) diacrylate, poly(ethylene glycol) dimethacrylate, ethylene glycol dimethylacrylate (hereinafter referred to as "EGDMA"), 1,3-diisopropenylbenzene(DIP), 1,4-diacryloyl piperazine, 2-(diethylamino)ethyl methacrylate, 2,6-bisacryloylamidopyridine, 3-(acryloyloxy)-2-hydroxypropyl methacrylate, 3,5-bis(acryloylamido)benzoic acid, 3-aminopropyltriethoxysilane, 3-isocyanatopropyltriethoxysilane, 3-methylacryloxypropyl trimethoxysilane, bis-(1-(tert-butylperoxy)-1-methylethyl)-benzene, dicumyl peroxide, dimethacrylate, divinylbenzene, ethylene glycol maleic rosinate acrylate, glycidylmethacrylate, hydroxyquinoline, i-phenyldiethoxysilane, maleic rosin glycol acrylate, methylene bisacrylamide, N,N'-1,4-phenylenediacrylamine, N,O-bisacryloyl-phenylalaninol, N,O-bismethacryloyl ethanolamine, pentaerythritol triacrylate, phenyltrimethoxy silane, tetramethoxysilane, tetramethylene, tetraethoxysilane, and triallyl isocyanurate.

Further, the crosslinking agent may be included in an amount of 1 to 30 parts by weight based on 100 parts by weight of the PEO-based copolymer containing the crosslinkable functional group. If the content of the crosslinking agent is less than 1 part by weight, crosslinking with the crosslinkable functional group may not be sufficiently achieved, and if the content of the crosslinking agent is more than 30 parts by weight, excessive crosslinking may occur and the mobility of the polymer chain decreases, which may lead to a decrease in ionic conductivity.

In one embodiment of the disclosure, the initiator may induce a radical polymerization reaction between the crosslinkable functional groups to form a crosslinking bond between the crosslinkable functional groups. The functional group that enables the radical polymerization reaction may be a functional group containing vinyl at the end, for example, an allyl group.

The initiator is not particularly limited as long as it is an initiator that can induce a radical polymerization reaction between the crosslinkable functional groups. For example, the initiator may include at least one selected from the group consisting of benzoyl peroxide, azobisisobutyronitrile, lauroyl peroxide, cumene hydroperoxide, diisopropylphenyl-hydroperoxide, tert-butyl hydroperoxide, p-methane hydroperoxide and 2,2'-azobis(2-methylpropionitrile).

The initiator may be used in an amount of 0.5 to 2 parts by weight based on 100 parts by weight of the PEO-based copolymer containing a crosslinkable functional group. When the initiator is used within the above range, it can make it possible to induce a radical polymerization reaction between crosslinkable functional groups and efficiently form a

crosslinking bond.

Meanwhile, in step (S2), the substrate can be unwound using an unwinder and supplied to a transfer path.

The unwinder unwinds and supplies a substrate wound in a roll shape through a predetermined transfer path, and can unwind and supply the substrate by its own drive. Further, in step (S6), the substrate may be unwound and supplied by the driving force of a rewinder that winds the substrate having the composite solid electrolyte layer formed thereon.

Therefore, the preparation of the composite solid electrolyte according to one embodiment may be a roll-to-roll process.

Further, the substrate is not particularly limited as long as it can function as a support for the coating film, and may be in the form of a film. For example, the substrate may SUS (stainless use steel), polyethylene terephthalate film, polytetrafluoroethylene film, polyethylene film, polypropylene film, polybutene film, polybutadiene film, vinyl chloride copolymer film, polyurethane film, ethylenevinylacetate film, ethylene-propylene copolymer film, ethylene-ethyl acrylate copolymer film, ethylene-methyl acrylate copolymer film or polyimide film.

Meanwhile, in step (S3),the mixed solution can be coated onto the substrate to form a coating film.

Further, the coating method is not particularly limited as long as it can form a coating film by coating the mixed solution onto the substrate. For example, the coating method may be bar coating, roll coating, spin coating, slit coating, die coating, blade coating, comma coating, slot die coating, lip coating, spray coating or solution casting.

In one specific example of the coating method, a solution casting method may be used. More specifically, the mixed solution prepared in step (S1) is placed in a mixer, then the mixer is located on the substrate and the mixed solution is continuously casted on the substrate supplied through a unidirectional transfer path, thereby form a coating film.

Further, in step (S4), the coating film formed on the substrate can be transferred to a drying section and dried to form a polymer film.

The drying method may use a hot air drying method of drying with hot air at a temperature within a certain range, but is not limited to these examples.Any method can be used as long as the coating film on the substrate having the coating film formed thereon can be dried.

Specifically, the drying may be performed at 50°C to 250°C, and specifically, the drying temperature may be 50°C or more, 70°C or more, or 90°C or more, and 120°C or less, 150°C or less, 200°C or less, or 250°C or less. If the drying temperature is less than 50°C, the coating film formed by coating the mixed solution onto the substrate is not sufficiently dried, and may flow down as a liquid phase, and if the drying temperature is more than 250°C, the coating film coated onto the substrate may be damaged or bubbles may be generated, so that a smooth coating film may not be formed.

Alternatively, the drying can comprise a primary drying and a secondary drying. Through the primary drying, a part of the solvent contained in the coating film may be removed to form a film, and through the secondary drying, a crosslinking bond between crosslinkable functional groups induced by the initiator and/or a crosslinking bond between the crosslinkable functional group and the crosslinking agent may be formed.

The primary drying may be performed at room temperature for 5 to 20 hours, and the secondary drying may be performed at 50°C to 250°C as described above. When the drying process is performed by primary drying and secondary drying in this way, a film with a uniform shape is formed, and the internal crosslinking bond can be better formed.

In addition, the drying section is not limited to one stage. If the drying path is long, the drying section may be formed in multiple stages to improve drying efficiency. For example, a drying section of three or more stages may be formed.

As a result of the drying process, the polymer film undergoes a crosslinking reaction, and may include polymer chains including a crosslinking bond. The crosslinking bond may include a crosslinking bond between crosslinkable functional groups and/or a crosslinking bond between a crosslinkable functional group and a crosslinking agent. For example, at least a part of the crosslinkable functional groups may form a crosslinking bond with each other via the crosslinking agent, thereby forming the above-mentioned three-dimensional network structure.

The crosslinking bond between crosslinkable functional groups may be a urethane crosslinked bond, an ester crosslinked bond, a hydrogen bond, a bond formed from a radical polymerization reaction by a vinyl group at the end of an allyl group ($-CH_2-CH=CH_2$), and the like, but is not limited to these examples.

Further, a crosslinking bond between the crosslinkable functional group and the crosslinking agent may be a hydrogen bond, a bond formed by a Lewis acid-base interaction, an ionic bond, a coordination bond, or a bond formed by radical polymerization.

The ceramic compound may be uniformly dispersed in the internal space of the crosslinked polymer chain, for example, within a three-dimensional network structure, and the lithium salt may be dissociated and contained in an ionic state.

Meanwhile, in step (S5), the polymer film may be transferred to a vapor deposition section and a polar solvent may be vapor-deposited to prepare a composite solid electrolyte.

The vapor deposition naturally evaporates the polar solvent at room temperature or evaporates it by heating, so that the gas molecules of the polar solvent can be bonded to the polymer chains inside the polymer film, or the gas molecules of the polar solvent can be included in the internal space of the polymer chains.

The polar solvent is uniformly diffused on the surface and/or inside of the polymer by leaving the polar solvent at room temperature or by vapor-depositing the solvent through heating in this way, so that the gas molecules of the polar solvent can be bonded to the polymer chain, or can be included in a uniformly dispersed form in the internal space of the polymer chain.

When the polar solvent is left at room temperature during the vapor deposition, a trace amount of a polar solvent with a low boiling point can penetrate into the solid electrolyte at room temperature, thereby effectively inducing a change in the conformation of the polymer chains crosslinked within the polymer.

Further, when heating a polar solvent during vapor deposition, the vapor deposition rate can be improved. At this time, the heating temperature is not particularly limited as long as it is a temperature at which the polar solvent can undergo a phase change to vapor, and may be, for example, 30°C to 80°C. A general PEO is melted at 60°C, but when a PEO-based copolymer modified with the crosslinkable functional group forms a crosslinked structure, it is improved in heat resistance and can withstand up to 80°C, thereby further increasing a vapor deposition rate. Further, the heating method is not limited as long as it is a method that can supply energy to generate steam. For example, a direct heating method using a burner or stove, or an indirect heating method using a heater or steam pipe, etc. can be used, but the method is not limited only to these examples.

During the heating, when the heating temperature is too high, there are the drawbacks that the solvent may boil at a boiling point or higher of the polar solvent, or deformation of the polymer may be induced, and it is difficult to control the evaporation rate of the polar solvent during vapor deposition. Therefore, in order to perform vapor deposition with a trace amount of polar solvent, it may be desirable to perform vapor deposition at a heating temperature in the appropriate range as specified above.

A polymer solid electrolyte comprising a polar compound which is a gaseous molecule of the polar solvent bonded to the chains of crosslinked polymers via vapor deposition or contained in the internal spaces between polymer chains, as described above, can be prepared.

The polar compound is a gas molecule of a polar solvent used in the vapor deposition process, which may be included on the surface or inside of the polymer chain by adsorbing a gas molecule of the polar solvent to the polymer during vapor deposition, and then diffusing it into the polymer chain. Specifically, the polar compound is either bonded to the polymer chain, or contained in a dispersed form in the internal space between the polymer chains.

The polar compound is either bonded to the polymer chain, or contained in a dispersed form in the internal space between the polymer chains, thereby capable of improving the ionic conductivity of the final prepared composite solid electrolyte.

Such a composite solid electrolyte does not substantially contain a solvent or electrolyte solution in a liquid state, but contains a trace amount of a polar compound included or bonded in a gaseous state by the vapor deposition. Such a composite solid electrolyte can be confirmed from the fact that no liquid components are observed on the surface of the electrolyte layer, for example, when the electrolyte layer containing the same is separated from the all-solid-state battery and then observed with the naked eye, an electron microscope or the like. Unlike the same, when a polar solvent or electrolyte solution in a liquid state is injected into the composite solid electrolyte, a liquid component or a component showing wettability can be observed on the surface of the electrolyte layer. In addition, the composite solid electrolyte in which the polar compound is vapor-deposited and contained in a gaseous state exhibits significantly higher ionic conductivity than when a polar solvent or electrolyte solution in a liquid state is injected. Even through such comparison of ionic conductivity, and the like, a composite solid electrolyte in which the polar compound is vapor-deposited and contained in a gaseous state can be confirmed.

Specifically, a polar compound bonded to the polymer chain or contained in the internal space between the polymer chains can function as a plasticizer and plasticize the polymer. The plasticized polymer may have an increased amorphous region in the inside thereof, which can improve the mobility of the polymer chain. As the mobility of the polymer chain improves, the ion hopping effect inside the polymer increases, and the ionic conductivity of the composite solid electrolyte can be improved.

Further, the polar compound can function as an intermediate for smooth ion transfer through ion hopping. Since the affinity between lithium ions and polar compounds is stronger than the affinity between lithium ions and the ether oxygen of the PEO-based copolymer, the transfer of lithium ions may be faster and easier within the polymer to which the polar compound is adsorbed. That is, as the polar compound, which is a polar solvent molecule, flows in the inside of the polymer, the cation solvation effect of lithium ions increases to improve ion mobility, and thereby, the ionic conductivity of the composite solid electrolyte can be improved.

Further, the polar solvent or the polar compound corresponding thereto may include at least one selected from the group consisting of a carbonate-based compound and a sulfonyl-based compound.

Specifically, the polar compound may include at least one selected from the group consisting of ethyl methyl carbonate(EMC), dimethyl carbonate(DMC), diethyl carbonate(DEC), ethylene carbonate(EC), propylene carbonate(PC), vinylene carbonate(VC) and Sulfolane, or a combination thereof.

The content of the polar compound may include 0.1% by weight or more and less than 10% by weight, based on

the total weight of the composite solid electrolyte. For example, the content of the polar compound may be 0.1% by weight or more, 1% by weight or more, and 2% by weight or less, or 8% by weight or less, or 9% by weight or less, or less than 10% by weight. When the content of the polar compound is less than 0.1% by weight, it is difficult to induce a change in the chain conformation inside the polymer, and thus, the ionic conductivity of the composite solid electrolyte is not improved. When the content of the polar compound is 10% by weight or more, the solid electrolyte has a large liquid content and has the properties of a semi-solid battery. Further, the mechanical strength of the composite solid electrolyte may decrease due to gelation of the polymer.

Additionally, in step (S6), the substrate including the composite solid electrolyte layer can be wound and recovered using a rewinder.

The rewinder can wind and recover the substrate including the composite solid electrolyte layer into a roll shape, and can wind the substrate including the composite solid electrolyte layer by its own drive.

The substrate containing the recovered composite solid electrolyte layer can be used by itself, or the composite solid electrolyte may be used in the form of a free-standing film by further performing the step of separating the composite solid electrolyte layer from the substrate.

The free-standing film refers to a film that can maintain its film form by itself at room temperature and pressure without a separate support, that is, without a substrate.

In the preparation method of the above-described one embodiment, steps (S1) to (S6) can be performed continuously, so that the composite solid electrolyte can be prepared by a continuous process.

## Composite solid electrolyte

The composite solid electrolyte prepared according to the above-mentioned one embodiment comprises: a polymer containing a PEO (polyethylene oxide)-based copolymer containing a crosslinkable functional group; a ceramic compound; and a polar compound, wherein at least a part of the crosslinkable functional groups of the copolymer form a crosslinking bond with each other, so that the polymer forms a three-dimensional network structure, and wherein the polar compound in a gaseous state is contained in the three-dimensional network structure or may have a structure bonded on the polymer chain.

In the composite solid electrolyte, the three-dimensional network structure is a structure including a three-dimensional frame and an internal space formed by an upper frame, the frame includes a polymer chain containing a crosslinking bond formed by the crosslinkable functional group, and the internal space may contain a ceramic compound or a polar compound in a gaseous state through vapor deposition.

The crosslinking bond formed by the crosslinkable functional group constituting the frame may include a crosslinking bond between the crosslinkable functional groups and/or a crosslinking bond between the crosslinkable functional groups and the crosslinking agent.

As the ceramic compound is contained in a dispersed form in the internal space of the three-dimensional network structure, uniform dispersion of the ceramic compound is possible. Due to the morphological characteristics in which the ceramic compound is uniformly dispersed, the mechanical strength and ionic conductivity of the composite solid electrolyte can be further improved.

Further, a polar compound in a gaseous state may be bonded to the polymer chain, or a polar compound in a gaseous state may be contained in the internal space of the polymer chain. At this time, the method by which the polar compound is bonded to the polymer chain is not particularly limited as long as the polar compound is fixed to the polymer chain. In other words, the bond may mean including both physicochemical and chemical bonds.

In addition, the form, structure, types and contents of the components of the composite solid electrolyte are the same as described above.

## All-solid-state battery

A further embodiment of the disclosure also relates to an all-solid-state battery comprising the above composite solid electrolyte, wherein the all-solid-state battery includes a negative electrode, a positive electrode, and a composite solid electrolyte interposed between the negative electrode and the positive electrode, and the solid electrolyte is prepared according to the above-mentioned one embodiment.

Specifically, the composite solid electrolyte has a three-dimensional network structure of the polymer chain as described above, wherein a ceramic compound is uniformly contained in the inner space of the polymer chain, and a polar compound, which is a gas molecule of a polar solvent, is bonded to the polymer chain or contained in the internal space of the polymer chain through a vapor deposition process, thereby improving the mechanical properties and ionic conductivity are improved, which can be suitable as an electrolyte for an all-solid-state battery.

Meanwhile, the positive electrode included in the all-solid-state battery includes a positive electrode active material layer, wherein the positive electrode active material layer may be formed on one surface of the positive electrode

current collector.

The positive electrode active material layer includes a positive electrode active material, a binder, and a conductive material.

Further, the positive electrode active material is not particularly limited as long as it is a material capable of reversibly absorbing and desorbing lithium ions, and examples thereof may be a layered compound, such as lithium cobalt oxide($LiCoO_2$), lithium nickel oxide($LiNiO_2$), Li[NixCoyMnzMv]$O_2$ (where M is any one selected from the group consisting of Al, Ga, and In, or two or more elements thereof; and 0.3≤x<1.0, 0≤y, z≤0.5, 0≤v≤0.1, and x+y+z+v=1), Li(LiaMb-a-b'M'b')$O_{2-c}A_c$ (where 0≤a≤0.2, 0.6≤b≤1, 0≤b'≤0.2, and 0≤c≤0.2; M includes Mn and at least one selected from the group consisting of Ni, Co, Fe, Cr, V, Cu, Zn, and Ti; M' is at least one selected from the group consisting of Al, Mg, and B; and A is at least one selected from the group consisting of P, F, S, and N), or a compound substituted with at least one transition metal; lithium manganese oxides such as the chemical formula $Li_{1+y}Mn_{2-y}O_4$(where y ranges from 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni-site type lithium nickel oxide expressed by the chemical formula $LiNi_{1-y}MyO_2$ (where M is Co, Mn, Al, Cu, Fe, Mg, B, or Ga, and y ranges from 0.01 to 0.3); lithium manganese complex oxide expressed by the chemical formula $LiMn_{2-y}M_yO_2$ (where M is Co, Ni, Fe, Cr, Zn, or Ta, and y ranges from 0.01 to 0.1) or $Li_2Mn_3MO_8$ (where M is Fe, Co, Ni, Cu, or Zn); $LiMn_2O_4$ having a part of Li being substituted with alkaline earth metal ions; a disulfide compound; and a complex oxide formed of $Fe_2(MoO_4)_3$, but are not limited thereto.

Further, the positive electrode active material may be included in an amount of 40 to 80% by weight based on the total weight of the positive electrode active material layer. Specifically, the content of the positive electrode active material may be 40% by weight or more or 50% by weight or more, and 70% by weight or less or 80% by weight or less. **If** the content of the positive electrode active material is less than 40% by weight, the connectivity between positive electrode active materials may be insufficient, and if the content of the positive electrode active material is more than 80% by weight, the mass transfer resistance may increase.

Further, the binder is a component assisting in binding between the positive electrode active material and the conductive material, and in binding with the current collector. The binder may include at least one selected from the group consisting of styrene-butadiene rubber, acrylic styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepicchlorohydrin, polyphosphazene,polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include at least one selected from the group consisting of styrene-butadiene rubber, polytetrafluoroethylene, carboxymethylcellulose, polyacrylic acid, lithium polyacrylate and polyvinylidene fluoride.

Further, the binder may be included in an amount of 1% by weight to 30% by weight based on the total weight of the positive electrode active material layer. Specifically, the content of the binder may be 1% by weight or more or 3% by weight or more, and 15% by weight or less or 30% by weight or less. **If** the content of the binder is less than 1% by weight, the adhesion between the positive electrode active material and the positive electrode current collector may decrease, and if the content of the binder is more than 30% by weight, the adhesion is improved, but the content of the positive electrode active material is reduced accordingly, which may lower battery capacity.

Further, the conductive material is not particularly limited as long as it does not cause side reactions in the internal environment of the all-solid-state battery and does not cause chemical changes in the battery but has excellent electrical conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may typically be included in an amount of 0.5% to 30% by weight based on the total weight of the positive electrode active material layer. Specifically, the content of the conductive material may be 0.5% by weight or more or 1% by weight or more, and 20% by weight or less, or 30% by weight or less. If the content of the conductive material is too low, that is, less than 0.5% by weight, it is difficult to obtain an effect on the improvement of the electrical conductivity, or the electrochemical characteristics of the battery may be deteriorated. If the content of the conductive material too high, that is, more than 30% by weight, the amount of positive electrode active material is relatively small and thus capacity and energy density may be lowered. The method of incorporating the conductive material into the

positive electrode is not particularly limited, and conventional methods known in the related art such as coating on the positive electrode active material can be used.

Further, the positive electrode current collector supports the positive electrode active material layer and plays the role of transmitting electrons between the external conductor wire and the positive electrode active material layer.

The positive electrode current collector is not particularly limited so long as it does not cause chemical changes in the all-solid-state battery and has high conductivity. For example, the positive electrode current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

The positive electrode current collector may have a fine protrusion and depression structure on its surface or may adopt a three-dimensional porous structure in order to improve bonding strength with the positive electrode active material layer. Thereby, the positive electrode current collector may be used in any of various forms including a film, a sheet, a foil, a mesh, a net, a porous body, a foaming body, and a non-woven fabric structure.

The positive electrode as described above can be prepared according to conventional methods. Specifically, the positive electrode can be prepared by a process in which a composition for forming a positive electrode active material layer, which is prepared by mixing a positive electrode active material, a conductive material, and a binder in an organic solvent, is coated and dried on a positive electrode current collector, and optionally, compression molding is performed on the current collector to improve the electrode density. At this time, as the organic solvent, a solvent that can uniformly disperse the positive electrode active material, binder, and conductive material, and that evaporates easily, is preferably used. Specifically, acetonitrile, methanol, ethanol, tetrahydrofuran, water, isopropyl alcohol, and the like can be mentioned.

On the other hand, the negative electrode contained in the all-solid-state battery includes a negative electrode active material layer, and the negative electrode active material layer may be formed on one surface of the negative electrode current collector.

The negative electrode active material may include a material capable of reversible intercalation and deintercalation of lithium ($Li^+$), a material that can react with lithium ions to reversibly form a lithium-containing compound, lithium metal or lithium alloy.

The material capable of reversible intercalation and deintercalation of lithium ion ($Li^+$) may be, for example, a crystalline carbon, an amorphous carbon, or a mixture thereof. The material that can react with lithium ions ($Li^+$) to reversibly form a lithium-containing compound may be, for example, tin oxide, titanium nitrate, or silicon. The lithium alloy may be, for example, an alloy of lithium(Li) and a metal selected from the group consisting of sodium(Na), potassium(K), rubidium(Rb), cesium(Cs), francium(Fr), beryllium(Be), magnesium(Mg), calcium(Ca), strontium (Sr), barium (Ba), radium(Ra), aluminum(Al) and tin(Sn).

Preferably, the negative electrode active material may be lithium metal, and specifically, may be in the form of a lithium metal thin film or lithium metal powder.

The negative electrode active material may be included in an amount of 40 to 80% by weight based on the total weight of the negative electrode active material layer. Specifically, the content of the negative electrode active material may be 40% by weight or more or 50% by weight or more, and 70% by weight or less or 80% by weight or less. **If** the content of the negative electrode active material is less than 40% by weight, the connectivity between the wet negative electrode active material layer and the dry negative electrode active material layer may become insufficient, and if the content of the negative electrode active material is more than 80% by weight, the mass transfer resistance may increase.

Further, the binder is the same as described above for the positive electrode active material layer.

Further, the conductive material is the same as described above for the positive electrode active material layer.

Further, the negative electrode current collector is not particularly limited so long as it does not cause chemical changes in the corresponding battery and has conductivity. For example, the negative electrode current collector may be made of copper, stainless steel, aluminum, nickel, titanium, fired carbon, copper or stainless steel that is surface-treated with one of carbon, nickel, titanium, silver, or the like, an aluminum-cadmium alloy, or the like. Further, similar to the positive electrode current collector, the negative electrode current collector may be used in various forms such as a film, a sheet, a foil, a net, a porous body, a foaming body, and a non-woven fabric structure, which fine protrusions and depressions are formed on a surface thereof.

The preparation method of the negative electrode is not particularly limited, and it can be prepared by forming a negative electrode active material layer on a negative electrode current collector using a layer or film forming method commonly used in the art. For example, methods such as compression, coating, and deposition can be used. Further, the negative electrode of the present disclosure also includes a case in which a battery is assembled in a state where a lithium thin film does not exist on the negative electrode current collector, and then a metallic lithium thin film is formed on a metal plate through initial charging.

According to still another embodiment, there are provided a battery module including the all-solid state battery as a unit cell, a battery pack including the battery module, and a device including the battery pack as a power source.

At this time, particular examples of the device may include, but are not limited to: power tools driven by an electric

motor; electric cars, including electric vehicles(EV), hybrid electric vehicles(HEV), plug-in hybrid electric vehicles(PHEV), or the like; electric carts, including electric bikes (E-bikes) and electric scooters (E-scooters); electric golf carts; electric power storage systems; or the like.

Preferred examples will be presented hereinafter so that the present disclosure can be understood with ease. However, the following examples are for illustrative purposes only and the scope of the invention is not limited thereto.

In the following Examples and Comparative Examples, a solid electrolyte containing a polymer containing a copolymer and an organic solvent was prepared as shown in Table 1 below.

## EXAMPLE

### Example 1: Preparation of composite solid electrolyte

Step 1) Preparation of mixed solution

A polyethylene oxide (PEO)-based copolymer of the following Chemical Formula 1a was prepared:

[Chemical Formula 1a]

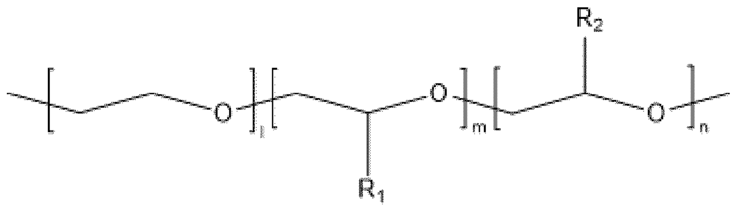

wherein, in Chemical Formula 1a, $R_1$ is $-CH_2-O-(CH_2-CH_2-O)_k-CH_3$, $R_2$is $-CH_2-O-CH_2-CH=CH_2$, k is 2, the ratio of l : m : n is 85:13:2, and the weight average molecular weight (Mw) of the copolymer is about 2,000,000 g/mol.

The copolymer of Chemical Formula 1a has an allyl group bonded through a methylene oxide linker as a crosslinkable functional group.

The polyethylene oxide copolymer was mixed with acetonitrile as a solvent, trimethylolpropane trimethacrylate as a crosslinking agent, benzoyl peroxide as an initiator, LiTFSI as a lithium salt, and LSTP as a ceramic compound were mixed to prepare a mixed solution of the polymer and the ceramic compound, which was then stirred using a magnetic bar for 24 hours. At this time, the mixed solution of the polyethylene oxide copolymer and the ceramic compound was composed of 20 parts by weight of trimethylolpropane trimethacrylate as a crosslinking agent, 1 part by weight of benzoyl peroxide as an initiator, 36 parts by weight of LiTFSI as a lithium salt, and 40 parts by weight of LSTP as a ceramic compound based on 100 parts by weight of the polyethylene oxide copolymer, wherein an acetonitrile solvent was used so that the concentration of polyethylene oxide copolymer, which is a polymer contained in the mixed solution, was 11.1 wt.%, and the concentration of the polymer polyethylene oxide copolymer and ceramic compound was 14.9 wt.%.

Step 2) Supply of substrate

SUS foil as a substrate film was supplied through a unidirectional transfer path using an unwinder.

Step 3) Formation of coating film

The mixed solution was placed in a mixer, and then coated by a solution casting method on SUS foil, which is a substrate film supplied through a unidirectional transfer path by an unwinder, to form a coating film.

Step 4) Formation of coating film

The coating film formed on the substrate film supplied through the unidirectional transfer path using the unwinder was transferred to the drying section, primarily dried at room temperature for 12 hours, and then secondarily dried at 100°C for 3 hours to prepare a polymer film with a thickness of 200 $\mu$m.

Step 5) Preparation of composite solid electrolyte after vapor deposition

The polymer film was transported to the vapor deposition section, and subjected to vapor deposition.

In the vapor deposition, the lower part of the chamber in the vapor deposition section was filled with EMC(ethylmethyl carbonate) solvent, and then naturally evaporated at room temperature for 72 hours, and the EMC vapor was allowed to flow into the inside of the polymer film that was transferred so as to be located at upper part of the chamber. Thereby, the EMC molecules were bonded to the polymer chain inside the polymer film or deposited so as to be located in the internal space of the polymer chain to prepare a composite solid electrolyte layer.

Step 6) Preparation of composite solid electrolyte after vapor deposition

The substrate film containing the prepared composite solid electrolyte layer was wound and recovered using a rewinder. Then, the substrate film was peeled off to prepare a composite solid electrolyte in the form of a free-standing film.

## COMPARATIVE EXAMPLE:

### Comparative Example 1: Composite solid electrolyte containing only modified PEO (containing no liquid)

A composite solid electrolyte was prepared in the same manner as in Example 1, except that the step of vapor-depositing the EMC solvent, which is step 5) of Example 1, was not performed.

### Comparative Example 2: Composite solid electrolyte containing modified PEO + large amount of liquid

A composite solid electrolyte was prepared in the same manner as in Example 1, except that the EMC solvent was directly injected into the composite solid electrolyte prepared in step 1) of Example 1.

### Comparative Example 3: Unmodified PEO + ceramic compound + organic solvent-deposited composite solid electrolyte

A composite solid electrolyte was prepared in the same manner as in Example 1, except that polyethylene oxide (PEO) homopolymer (weight average molecular weight: about 4,000,000 g/mol) unsubstituted with crosslinkable functional groups was used, and no crosslinking agent or initiator was added.

### Comparative Example 4: Modified PEO + organic solvent-deposited polymer solid electrolyte

A solid electrolyte was prepared in the same manner as in Example 1, except that no ceramic compound was added.

## EXPERIMENTAL EXAMPLE

### Experimental Example 1: Measurement of content of polar compound

The content of the polar compound could be measured by using a balance and monitoring the weight of the liquid phase evaporated over time while heating the solid electrolyte sample. For example, it can be measured by monitoring the weight of the liquid phase that evaporates over time while heating the sample at a temperature of 55 to 70°C, or at a temperature of 60°C using a heated electronic balance (AND MS-70). When the amount of polar compounds evaporated over time reached saturation, the saturation amount at that time was considered the total amount of polar compounds contained within the solid electrolyte. In Examples and Comparative Examples, the polar compound may be ethylmethyl carbonate (EMC).

### Experimental Example 2: Measurement of ionic conductivity of composite (or polymer) solid electrolyte

To measure the ionic conductivity of the polymer solid electrolyte prepared in Examples and Comparative Examples, the polymer solid electrolyte was formed on the lower substrate of a coin cell with a size of 1.7671 $cm^2$, and then a coin cell for ionic conductivity measurement was fabricated using SUS as a blocking electrode.

Resistance was measured using an electrochemical impedance spectrometer (EIS, VM3, Bio Logic Science Instrument) at 25°C with an amplitude of 10 mV and a scan range of 1Hz to 0.1 MHz, and then the ionic conductivity of the polymer solid electrolyte was calculated using the following Equation 1.

[Equation 1]

$$\sigma_i = \frac{L}{RA}$$

Wherein, in Equation 1, σi is the ionic conductivity (S/cm) of the polymer solid electrolyte, R is the resistance(Ω) of the polymer solid electrolyte measured with the electrochemical impedance spectrometer, L is the thickness (μm)of the polymer solid electrolyte, and A means the area ($cm^2$) of the solid electrolyte. The solid electrolyte sample used had L = 200 μm and A = 1.7671$cm^2$.

Table 1 below shows the measurement results of the content of the EMC vapor-deposited (or included) in the composite (or polymer) solid electrolyte and the ionic conductivity.

[Table 1]

| | EMC content (wt.%) based on the total weight of solid electrolyte | Ion conductivity (S/cm) |
|---|---|---|
| Example 1 | 1.2 | $1.3 \times 10^{-3}$ |
| Comparativ e Example 1 | - | $1.4 \times 10^{-4}$ |
| Comparativ e Example 2 | 12 | $3.8 \times 10^{-4}$ |
| Comparativ e Example 3 | 1.5 | Not measurable |
| Comparativ e Example 4 | 1.2 | $5.1 \times 10^{-4}$ |

Referring to Table 1, it was confirmed that the continuously prepared composite solid electrolyte of Example exhibited excellent ionic conductivity compared to the solid electrolyte of Comparative Examples.

## Claims

**1.** A method for preparing a composite solid electrolyte, the method comprising the steps of:

(S1) preparing a mixed solution containing a PEO (polyethylene oxide)-based copolymer containing a crosslinkable functional group and a ceramic compound;
(S2) unwinding a substrate using an unwinder and supplying it to a transfer path;
(S3) coating the mixed solution onto the substrate to form a coating film;
(S4) transferring the substrate having the coating film formed thereon to a drying section and drying it to form a polymer film;
(S5) transferring the polymer film to a vapor deposition section and vapor-depositing a polar solvent to form a composite solid electrolyte layer; and
(S6) winding and recovering the substrate including the composite solid electrolyte layer using a rewinder.

**2.** The method for preparing a composite solid electrolyte according to claim 1, wherein the mixed solution of step (S1) further comprises at least one selected from the group consisting of a lithium salt, a crosslinking agent, and an initiator.

**3.** The method for preparing a composite solid electrolyte according to claim 1, wherein the mixed solution contains 10 to 100 parts by weight of the ceramic compound based on 100 parts by weight of the PEO (polyethylene oxide)-based copolymer.

**4.** The method for preparing a composite solid electrolyte according to claim 1, wherein in the vapor deposition of step (S5), the polar solvent is naturally evaporated at room temperature or evaporated by heating so that gas molecules of the polar solvent are included on the surface or inside of the polymer chain.

**5.** The method for preparing a composite solid electrolyte according to claim 1, wherein the crosslinkable functional group is bonded to the PEO-based copolymer via an alkylene linker or alkylene oxide linker having 0 to 10 carbon atoms, provided that an alkylene linker having 0 carbon atoms represents a single bond, and

is selected from the group consisting of a hydroxyl group, a carboxyl group, an isocyanate group, a nitro group, a cyano group, an amine group, an amide group, an epoxy group and an allyl group.

6. The method for preparing a composite solid electrolyte according to claim 1, wherein the PEO(polyethylene oxide)-based copolymer is a copolymer containing repeating units of the following Chemical Formulas 1 to 3:

[Chemical Formula 1]

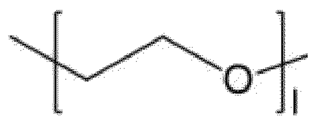

[Chemical Formula 2]

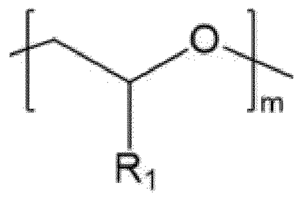

[Chemical Formula 3]

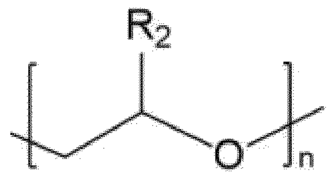

wherein, in Chemical Formulas 1 to 3, $R_1$ represents $-CH_2-O-(CH_2-CH_2-O)_k-R_3$, k is 0 to 20, $R_3$ represents an alkyl group having 1 to 5 carbon atoms,

$R_2$ represents a substituent in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having 0 to 10 carbon atoms, provided that an alkylene linker having 0 carbon atoms represents a single bond, and

l, m and n are the number of repetitions of the repeating unit, wherein l and n are each independently an integer of 1 to 1000, and m is an integer of 0 to 1000.

7. The method for preparing a composite solid electrolyte according to claim 1, wherein a gas molecule of the polar solvent is a polar compound, and
the content of the polar compound is 0.1% by weight or more and less than 10% by weight based on the total weight of the composite solid electrolyte.

8. The method for preparing a composite solid electrolyte according to claim 1, wherein the polar solvent comprises at least one selected from the group consisting of a carbonate-based solvent and a sulfonyl-based solvent.

9. The method for preparing a composite solid electrolyte according to claim 1, wherein the polar solvent comprises at least one selected from the group consisting of ethyl methyl carbonate(EMC), dimethyl carbonate(DMC), diethyl carbonate(DEC), ethylene carbonate(EC), propylene carbonate(PC), vinylene carbonate(VC) and Sulfolane.

10. The method for preparing a composite solid electrolyte according to claim 1, wherein the ceramic compound

comprises at least one selected from the group consisting of a lithium-lanthanum-zirconium oxide(LLZO)-based compound, a lithium-silicon-titanium phosphate(LSTP)-based compound, a lithium-lanthanum-titanium oxide(LLTO)-based compound, a lithium-aluminum-titanium phosphate(LATP)-based compound, a lithium-aluminum-germanium phosphate(LAGP)-based compound, and a lithium-lanthanum-zirconium-titanium oxide(LLZTO)-based compound.

**11.** The method for preparing a composite solid electrolyte according to claim 1, wherein the steps (S1) to (S6) are performed continuously.

**12.** A composite solid electrolyte prepared by the preparation method of any one of claims 1 to 11.

**13.** The composite solid electrolyte according to claim 12, comprising a polymer containing a PEO-based copolymer containing a crosslinkable functional group; a ceramic compound; and a polar compound,

wherein at a part of the crosslinkable functional group form a crosslinking bond with each other, so that the polymer forms a three-dimensional network structure, and
wherein the polar compound in a gaseous state is contained in the three-dimensional network structure or is bonded to the polymer chain.

【Figure 1】

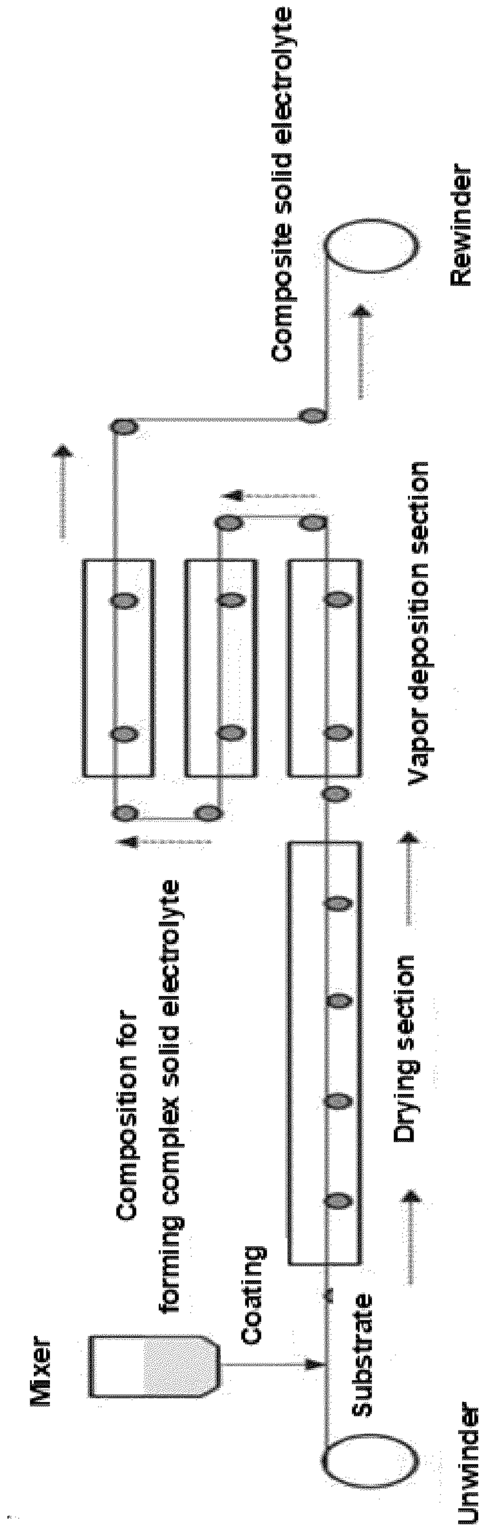
Composite solid electrolyte
Rewinder
Vapor deposition section
Composition for
forming complex solid electrolyte
Drying section
Coating
Mixer
Substrate
Unwinder

**INTERNATIONAL SEARCH REPORT**

International application No.
**PCT/KR2023/015789**

**A. CLASSIFICATION OF SUBJECT MATTER**

**H01M 10/056**(2010.01)i; **H01M 10/052**(2010.01)i; **C08J 5/22**(2006.01)i

According to International Patent Classification (IPC) or to both national classification and IPC

**B. FIELDS SEARCHED**

Minimum documentation searched (classification system followed by classification symbols)

H01M 10/056(2010.01); H01B 1/06(2006.01); H01M 10/052(2010.01); H01M 10/0525(2010.01); H01M 10/0565(2010.01); H01M 10/058(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 복합 고체 전해질(composite solid electrolyte), 가교 결합성 작용기(crosslinkable functional group), 폴리에틸렌 옥사이드계 코폴리머(polyethylene oxide-based copolymer), 세라믹 화합물(ceramic compound), 극성 화합물(polar compound), 기상 증착(vapor deposition), 전고체 전지(all solid state battery)

**C. DOCUMENTS CONSIDERED TO BE RELEVANT**

| Category* | Citation of document, with indication, where appropriate, of the relevant passages | Relevant to claim No. |
|---|---|---|
| Y | CN 113273010 A (OSAKA SODA CO., LTD.) 17 August 2021 (2021-08-17)<br>See claims 1-6; and paragraphs [0015]-[0024], [0026], [0031], [0035], [0042], [0043], [0049], [0051], [0054], [0056], [0065], [0070], [0098]-[0100] and [0105]. | 1-13 |
| Y | CN 111834667 A (SHENZHEN CAPCHEM TECHNOLOGY CO., LTD.) 27 October 2020 (2020-10-27)<br>See claims 1-10; paragraphs [0003], [0004], [0014], [0031], [0042], [0055]-[0062], [0068] and [0071]; example 2; and figure 1. | 1-13 |
| A | US 2003-0082457 A1 (NOH, H.-G.) 01 May 2003 (2003-05-01)<br>See claims 1, 6-13 and 19. | 1-13 |
| A | KR 10-2017-0113417 A (LG CHEM, LTD.) 12 October 2017 (2017-10-12)<br>See entire document. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 January 2024** | **22 January 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

## INTERNATIONAL SEARCH REPORT

International application No.
**PCT/KR2023/015789**

**C. DOCUMENTS CONSIDERED TO BE RELEVANT**

| Category* | Citation of document, with indication, where appropriate, of the relevant passages | Relevant to claim No. |
|---|---|---|
| A | KR 10-2277064 B1 (LINTEC CORPORATION) 13 July 2021 (2021-07-13)<br>See entire document. | 1-13 |

Form PCT/ISA/210 (second sheet) (July 2022)

**INTERNATIONAL SEARCH REPORT**
**Information on patent family members**

International application No.
**PCT/KR2023/015789**

| Patent document cited in search report | Publication date (day/month/year) | Patent family member(s) | Publication date (day/month/year) |
|---|---|---|---|
| CN 113273010 A | 17 August 2021 | WO 2020-110994 A1 | 04 June 2020 |
| CN 111834667 A | 27 October 2020 | None | |
| US 2003-0082457 A1 | 01 May 2003 | CN 100375329 C | 12 March 2008 |
| | | CN 100528931 C | 19 August 2009 |
| | | CN 1332486 A | 23 January 2002 |
| | | CN 1341675 A | 27 March 2002 |
| | | JP 2002-025621 A | 25 January 2002 |
| | | JP 2002-025622 A | 25 January 2002 |
| | | JP 4266083 B2 | 20 May 2009 |
| | | JP 4418126 B2 | 17 February 2010 |
| | | KR 10-0337889 B1 | 24 May 2002 |
| | | KR 10-0357960 B1 | 25 October 2002 |
| | | KR 10-2001-0105584 A | 29 November 2001 |
| | | KR 10-2002-0003901 A | 16 January 2002 |
| | | US 2002-0018937 A1 | 14 February 2002 |
| | | US 6632571 B2 | 14 October 2003 |
| | | US 6780544 B2 | 24 August 2004 |
| KR 10-2017-0113417 A | 12 October 2017 | CN 108140883 A | 08 June 2018 |
| | | CN 108140883 B | 29 January 2021 |
| | | EP 3333959 A1 | 13 June 2018 |
| | | EP 3333959 B1 | 29 April 2020 |
| | | KR 10-2018755 B1 | 06 September 2019 |
| | | US 10892519 B2 | 12 January 2021 |
| | | US 2018-0254523 A1 | 06 September 2018 |
| | | WO 2017-171436 A1 | 05 October 2017 |
| KR 10-2277064 B1 | 13 July 2021 | CN 106063018 A | 26 October 2016 |
| | | CN 106063018 B | 28 September 2018 |
| | | CN 106133480 A | 16 November 2016 |
| | | CN 106133480 B | 29 May 2018 |
| | | EP 3114765 A1 | 11 January 2017 |
| | | EP 3114765 B1 | 13 June 2018 |
| | | JP 2015-171222 A | 28 September 2015 |
| | | JP 6244989 B2 | 13 December 2017 |
| | | JP 6557214 B2 | 07 August 2019 |
| | | KR 10-1826461 B1 | 06 February 2018 |
| | | KR 10-2016-0130782 A | 14 November 2016 |
| | | TW 201542362 A | 16 November 2015 |
| | | TW I647100 B | 11 January 2019 |
| | | US 10122045 B2 | 06 November 2018 |
| | | US 2016-0365815 A1 | 15 December 2016 |
| | | US 2017-0069933 A1 | 09 March 2017 |
| | | US 9882242 B2 | 30 January 2018 |
| | | WO 2015-133388 A1 | 11 September 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220132766
- KR 1020230136063
- JP 6124713 A